# FASCICULE DE BREVET EUROPEEN

(11) **EP 1 966 067 B1**
(45) Date de publication et mention de la délivrance du brevet: **16.12.2009**
(21) Numéro de dépôt: 06847109.3
(22) Date de dépôt: 22.12.2006
(51) Int. Cl.: B65G 21/20

(54) **DISPOSITIF POUR REGLER DES COULOIRS SUR UN CONVOYEUR**
VORRICHTUNG ZUR EINSTELLUNG VON SPUREN AUF EINEM FLIESSBAND
DEVICE FOR ADJUSTING TRACKS ON A CONVEYOR

(30) Priorité: 27.12.2005 FR 0513342
(43) Date de publication de la demande: 10.09.2008
(73) Titulaire: Sidel Participations S.A.S., 76930 Octeville sur Mer (FR)
(72) Inventeur: BONHOMME, Eric, F-76930 Octeville sur Mer (FR); RODOT, Vincent, F-76930 Octeville sur Mer (FR)
(74) Mandataire: Cabinet Plasseraud
(86) Numéro de dépôt international: PCT/FR2006/002834
(87) Numéro de publication internationale: WO 2007/074230

(56) Documents cités:
- US-A- 3 767 027
- US-A- 5 411 129
- US-A1- 2005 217 974

## Description

La présente invention concerne un dispositif de réglage de couloirs qui sont disposés sur un convoyeur pour guider des objets comme, par exemple, des bouteilles, selon le préambule de la revendication 1.

Ces couloirs se rencontrent dans toutes les applications qui requièrent une arrivée de produits ou d'objets sur plusieurs voies. Ainsi, par exemple, ces couloirs sont utilisés sur des machines d'encaissage et/ou de palettisation d'objets du genre bouteilles. Ils permettent de réaliser un positionnement précis de ces bouteilles, sur plusieurs lignes, en vue de leur préhension, par exemple, au moyen d'un outil de manipulation approprié.

Pour rendre ces machines polyvalentes, il est intéressant de pouvoir modifier la largeur des couloirs afin de l'adapter aux différents formats des objets et en particulier des bouteilles à encaisser et/ou à palettiser.

Le document EP 1507722 décrit un dispositif qui permet d'adapter à volonté, et simultanément, la largeur des couloirs sur un convoyeur de transport de bouteilles, canettes ou autres.

La présente invention propose un perfectionnement à ce type d'installation qui permet d'améliorer son caractère universel.

Le dispositif de réglage des couloirs, selon l'invention, comprend
- d'une part, comme décrit dans le document précité, un mécanisme pour manoeuvrer les parois qui délimitent les différents couloirs, lequel mécanisme est constitué d'un système d'entraînement coordonné qui agit sur lesdites parois pour régler simultanément la largeur desdits couloirs, lesquelles parois sont guidées sur des glissières transversales qui sont disposées sur des structures porteuses solidaires du convoyeur,
- et, d'autre part, des moyens pour déplacer transversalement lesdits couloirs par rapport à l'axe médian longitudinal dudit convoyeur, lesquels moyens sont constitués, au niveau de chaque structure porteuse des différentes parois, d'un support en forme de chariot qui est interposé entre ladite structure porteuse et le système d'entraînement coordonné desdites parois, lequel chariot est mobile sous l'effet de moyens appropriés pour effectuer le déplacement transversal de l'ensemble desdits couloirs sans modifier leur largeur, de façon à pouvoir guider, selon le cas, des files de bouteilles ou autres, dont le nombre peut varier, passant d'un nombre pair à un nombre impair.
   En plus de l'amélioration du caractère universel d'une telle installation, le réglage transversal de la position des couloirs s'effectue très simplement et rapidement par l'intermédiaire d'une commande centralisée.
   Selon une autre disposition de l'invention, le dispositif de réglage de la position transversale des couloirs comporte un mécanisme pour manoeuvrer simultanément les différents chariots qui sont disposés au niveau de chacune des structures porteuses, lequel mécanisme de manoeuvre comporte des moyens de liaison, en forme d'arbres, qui relient lesdits chariots entre eux de façon à réaliser un réglage centralisé de la position transversale de l'ensemble des couloirs par rapport à l'axe médian de symétrie du convoyeur.
   Toujours selon l'invention, le mécanisme de manoeuvre de chaque chariot est constitué d'une crémaillère disposée sur ledit chariot et d'un pignon qui est entraîné par un organe de commande, lequel organe agit sur chaque chariot par l'intermédiaire d'un système d'arbres, lesquels arbres sont disposés latéralement de façon à ne pas entraver l'accès aux couloirs pour un opérateur, par exemple, en cas d'incident sur l'un desdits couloirs.
   Selon une autre disposition de l'invention, le système d'entraînement des parois, qui permet le réglage en largeur des couloirs, comprend une courroie ou chaîne sans fin tendue entre deux roues d'enroulement qui sont montées sur le chariot, laquelle chaîne est entraînée par des moyens appropriés disposés directement sur ledit chariot et ses deux brins sont parallèles au système de glissières de guidage desdites parois, lesquels brins de ladite chaîne sont chacun solidaires de l'une desdites parois, lesquelles parois qui sont entraînées par ladite chaîne, dénommées parois maîtres, entraînent les autres parois au moyen d'un système de coordination de l'écartement de ces dernières.
   Toujours selon l'invention, le système de coordination de l'écartement des différentes parois comprend : - un levier articulé sur l'une desdites parois et - des bielles parallèles entre elles, interposées entre ledit levier et chacune des autres parois, lesdites bielles forment, avec ledit levier, deux des côtés de figures triangulaires homothétiques et elles sont disposées dans un même plan qui est vertical, perpendiculaire à l'axe longitudinal du convoyeur.
   Ce dispositif de réglage permet de modifier à volonté la position et la largeur des couloirs d'une façon très simple et surtout ergonomique, sans effort au niveau de la manipulation des parois mobiles constitutives de ces couloirs.
   Ce dispositif présente aussi l'avantage de garantir une très grande précision pour le réglage de chaque couloir et, d'une manière générale, de permettre un fonctionnement de l'installation en toute sécurité, sans risque d'erreurs.
   Selon une autre disposition de l'invention, chaque structure porteuse des parois comporte un caisson permettant de loger l'ensemble des mécanismes de guidage et de manoeuvre desdites parois, lequel caisson est associé à des montants disposés latéralement sur le convoyeur et il forme, avec lesdits montants, une sorte de portique situé au-dessus du convoyeur, lesquels portiques sont disposés de part et d'autre du poste de reprise et un portique complémentaire est disposé en amont, au niveau de l'entrée des couloirs.
   Toujours selon l'invention, chaque chariot est guidé sur un rebord du caisson de la structure porteuse, lequel guidage s'effectue au moyen de lumières horizontales aménagées dans ledit rebord et de coulisseaux solidaires dudit chariot.
   Selon une autre disposition de l'invention, le mécanisme de réglage comprend deux systèmes d'arbres : - le système d'arbres pour la manoeuvre transversale des chariots et, - un système d'arbres pour la manoeuvre des parois, lesquels systèmes d'arbres comprennent, respectivement, un arbre maître qui s'étend entre les deux portiques amont et un arbre mené, relié audit arbre maître correspondant au moyen d'une chaîne du type sans fin, lesdits arbres étant, d'une manière générale, disposés latéralement et à un niveau qui n'entrave pas l'accès aux couloirs pour un opérateur.
   Toujours selon l'invention, chaque paroi est constituée de deux tronçons articulés l'un par rapport à l'autre: - un tronçon aval qui est disposé au niveau du poste de reprise et
- un tronçon amont qui est articulé sur ledit tronçon aval autour d'un axe vertical de façon à former, avec lesdits tronçons amont adjacents, une sorte d'embouchure ou d'entonnoir, lesquels tronçons amont sont manipulés, au niveau de leur extrémité amont, par le système d'entraînement desdites parois, lequel système d'entraînement desdits tronçons amont est déphasé par rapport aux autres systèmes d'entraînement desdits tronçons aval par un réglage différent, à l'origine, de façon à imprimer un écart plus important au niveau de l'entrée desdits tronçons amont.

Selon une autre disposition de l'invention, le système de coordination du réglage de largeur des parois comporte des moyens pour modifier rapidement la position d'une paroi latérale et pour l'escamoter, lesquels moyens sont disposés au niveau de l'extrémité de la bielle correspondante et en particulier sur le levier, lequel levier comporte un bouton poussoir qui coopère avec un crantage aménagé sur ladite bielle, cette dernière comportant, en outre, une butée qui permet de revenir facilement au réglage initial.

L'invention sera encore détaillée à l'aide de la description suivante et des dessins annexés, donnés à titre indicatif, et dans lesquels :
- la figure 1 est une vue en perspective d'un système de couloirs selon l'invention, vu de l'avant ;
- la figure 2 représente, toujours en perspective, le même système de couloirs, vu de l'arrière ;
- la figure 3 représente, sous forme de schéma fonctionnel, le dispositif de réglage des couloirs;
- la figure 4 illustre, sous forme de schéma fonctionnel également, les deux systèmes d'arbres servant, d'une part, an réglage de la largeur des couloirs et, d'autre part, au décalage transversal de l'ensemble desdits couloirs ;
- la figure 5 montre, vu de face, un mode de réalisation du dispositif de réglage des couloirs, et en particulier le dispositif qui est logé dans le caisson d'embouchure ;
- la figure 6 est une vue d'un rebord du caisson du portique d'embouchure, et en particulier le rebord aval ;
- la figure 7 est une coupe agrandie, selon 7-7, de la figure 5 ;
- la figure 8 est une coupe agrandie, selon 8-8, de la figure 5 ;
- la figure 9 est une coupe agrandie également, selon 9-9, de la figure 5 ;
- la figure 10 représente le détail de la fixation d'une bielle sur le levier de manoeuvre.

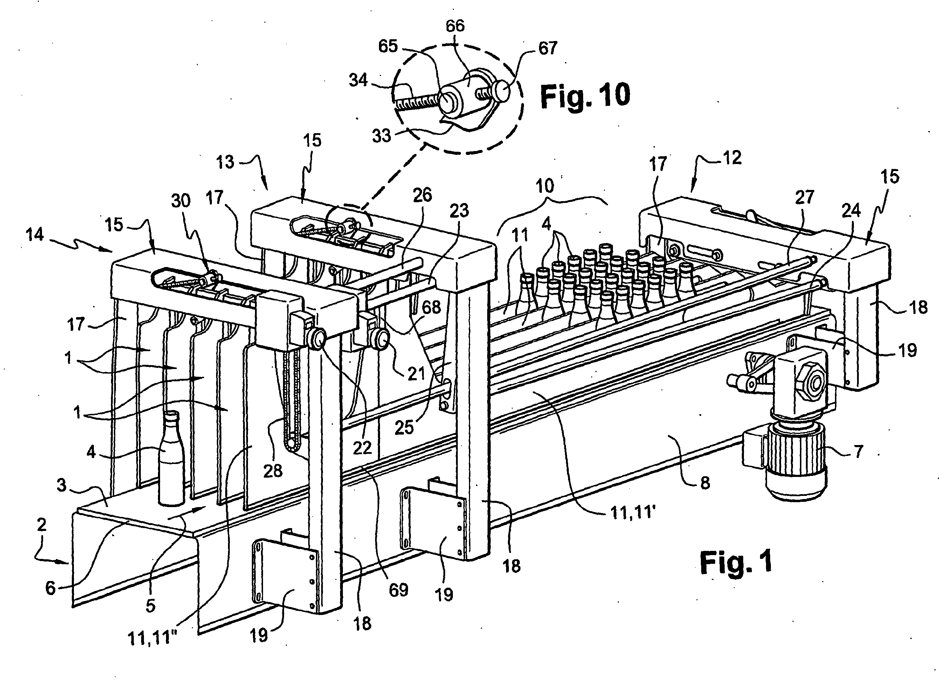

La figure 1 représente un système de couloirs (1) qui est installé à l'extrémité d'un convoyeur (2) comme, par exemple, un convoyeur du type à tapis sans fin (3), dont le brin supérieur, seul apparent sur ladite figure, porte et entraîne des objets du genre bouteilles (4), lesquelles bouteilles (4) avancent dans les différents couloirs (1) selon le sens représenté par la flèche (5).

Le tapis (3) glisse sur une sole (6) qui fait partie de la structure générale du convoyeur (2) et il est entraîné de façon classique au moyen d'un moto réducteur (7) qui est disposé à l'extrémité amont dudit convoyeur (2), sur l'un des flancs (8) de la structure de ce dernier.

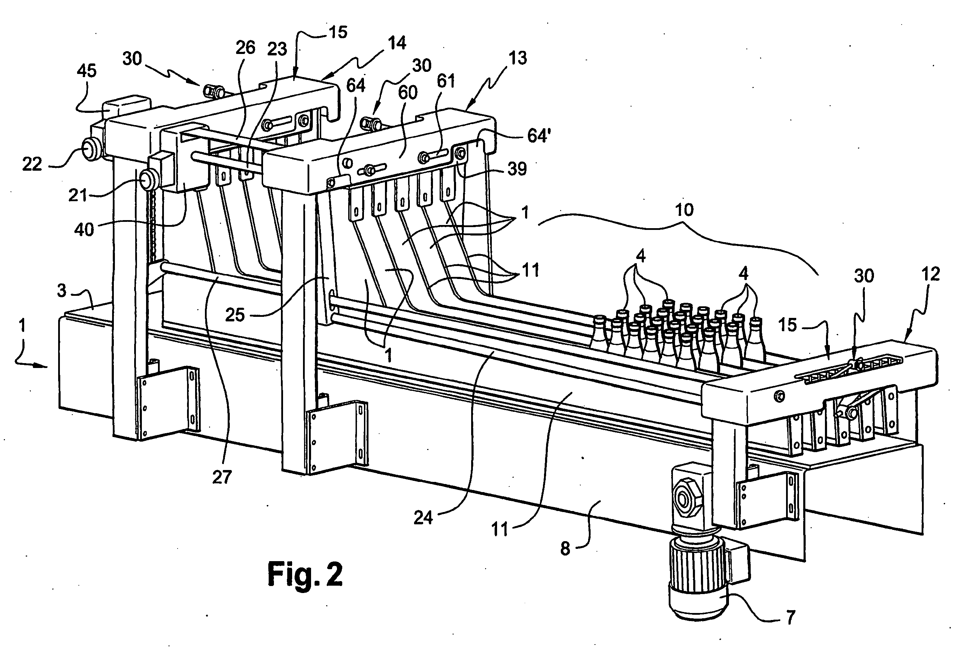

Ce système de couloirs se situe généralement au niveau d'un poste (10) de reprise dans une installation d'encaissage et/ou de palettisation de bouteilles (4), par exemple. Au niveau de ce poste (10), comme représentées figure 1 et figure 2, les bouteilles (4) sont ordonnées pour être reprises par des moyens appropriés, non représentés, du type têtes de préhension, lesquelles têtes sont associées à un outil de manipulation ou autre.

Sur ces figure 1 et 2, le système de couloirs (1) est constitué de parois (11) en forme de plaques métalliques, ou autres matériaux, qui s'étendent dans un plan vertical, au-dessus du tapis (3) du convoyeur, sur toute la longueur du poste de reprise (10) et même bien en amont.

Ces différentes parois (11) sont portées par des structures en forme de portiques ; dans l'exemple représenté, on trouve : - un portique (12) situé à extrémité aval dudit convoyeur et du poste de reprise (10), - un portique (13) situé juste en amont dudit poste (10) de reprise et, - un portique (14) complémentaire situé en amont dudit portique (13), lequel portique (14) peut être qualifié de portique d'embouchure.

Ces différents portiques (12, 13,14) sont aménagés pour porter les parois (11) et pour maintenir leur écartement; ils comportent, en plus, d'une part, des moyens qui permettent de régler la largeur de chaque couloir, c'est-à-dire des moyens qui permettent de régler l'écartement entre les différentes parois (11), de façon à adapter facilement l'installation aux différents formats de bouteilles (4) et, d'autre part, des moyens qui permettent de décaler transversalement l'ensemble desdites parois (11) formant les couloirs par rapport au plan vertical médian du convoyeur, sans modifier la largeur entre lesdits couloirs. Cet aménagement permet en fait de caler les couloirs par rapport à la tête dé préhension, en cas de changement au niveau de cette dernière.

Chaque portique (12, 13, 14) est constitué :
- d'un caisson (15) qui renferme les différents moyens de guidage et de manoeuvre des parois (11), lequel caisson s'étend transversalement au-dessus du convoyeur (2),
- de montants (17) et (18) qui s'étendent verticalement à partir des flancs (8) de la structure du convoyeur (2).

La hauteur des portiques (13, 14) amont est choisie en fonction de la hauteur des bouteilles (4) qui sont sur le convoyeur (2) ; la hauteur du portique aval (12) est différente car il est simplement positionné au-dessus de l'extrémité des parois (11) pour ne pas encombrer l'espace au niveau du poste (10) de reprise.

On remarque, sur les figures 1 et 2, que les montants (18) sont déportés latéralement par rapport au flanc (8) du convoyeur et qu'ils sont solidaires de ce flanc au moyen d'une chape (19). Ce déport latéral découle de la présence des différents moyens de commande des parois (11), lesquels moyens de commande seront détaillés plus loin.

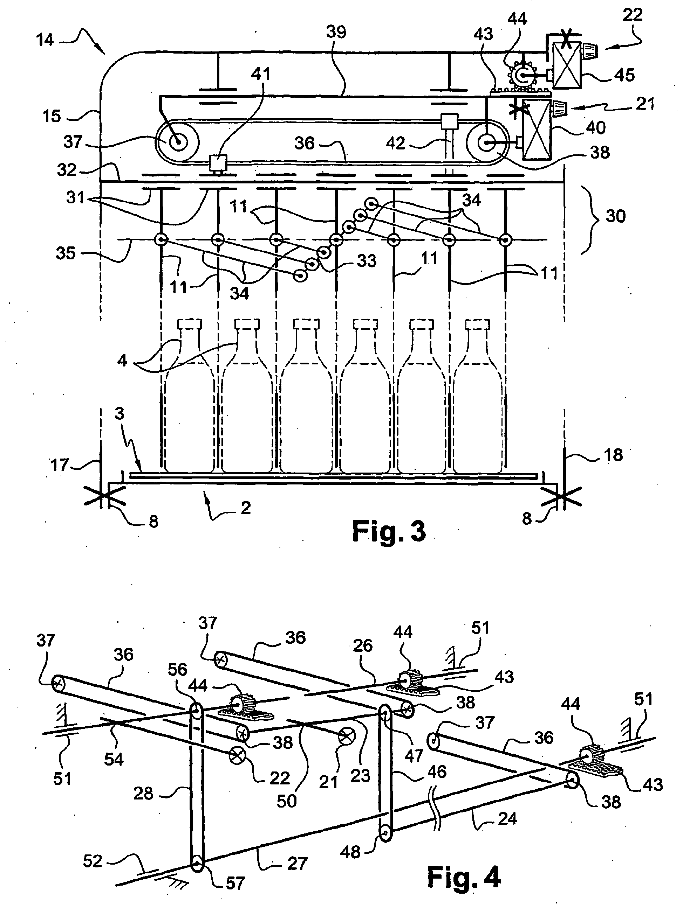

Les parois (11) sont portées et guidées par un système de glissières qui est intégré aux différents caissons (15), lequel système de glissières est détaillé plus loin, en liaison avec les figures 3, 5, 7 à 9. Les parois (11) sont également solidaires d'un mécanisme de manoeuvre qui est actionné par un organe (21) de commande ; cet organe (21) de commande permet de régler l'écartement desdites parois les unes par rapport aux autres et, par voie de conséquence, de régler la largeur de chaque couloir.

Les parois (11) sont également soumises à un second organe (22) de commande qui permet de régler la position transversale des couloirs (1), c'est-à-dire leur position par rapport au plan et à l'axe longitudinal médian du convoyeur. Cet organe (22) permet d'effectuer un déplacement transversal de l'ensemble desdits couloirs (1) sans modifier leur largeur, de façon à pouvoir guider, selon le cas, des files de bouteilles ou autres, dont le nombre peut varier, passant d'un nombre pair à un nombre impair.

Ces deux organes (21) et (22) sont regroupés au niveau du portique (14) ; ils agissent également au niveau des portiques (13), (12) par l'intermédiaire de deux systèmes d'arbres qui s'étendent entre lesdits portiques. Ainsi, figures 1 et 2, on remarque :
- un premier système d'arbres qui est constitué d'un arbre (23) situé entre les portiques (13) et (14) amont et d'un arbre (24) relié audit arbre (23) par une chaîne sans fin qui est disposée sous un carter (25), lequel arbre (24) s'étend entre les portiques (12) et (13), sur toute la longueur du poste (10), et,
- un second système d'arbres qui comprend un arbre (26) situé comme précédemment entre les portiques (13) et (14) et un arbre (27) relié audit arbre (26) par une chaîne (28) sans fin, lequel arbre (27) s'étend entre le portique (14) amont et le portique (12) aval.

Ces différents systèmes d'arbres sont disposés latéralement, de façon à ne pas entraver l'accès aux couloirs pour un opérateur. Ils seront aussi détaillés plus loin, en liaison notamment avec la figure 4.

Chaque caisson (15) des portiques (12, 13, 14) renferme les différents moyens de manoeuvre des parois (11) et en particulier le système (30) qui permet de coordonner et de régler l'écartement de ces différentes parois les unes par rapport aux autres.

Ce système (30) de coordination ainsi que les autres moyens de commande ont été représentés sous la forme d'un schéma fonctionnel, figure 3, pour faciliter la compréhension de l'ensemble.

On retrouve, schématiquement, au niveau de cette figure 3, le détail du portique (14) qui est constitué du caisson (15) et des montants (17) et (18) solidaires des flancs (8) du convoyeur (2). Le tapis (3) de ce convoyeur (2) supporte des bouteilles (4), lesquelles bouteilles sont guidées dans des couloirs dont le nombre est de six dans l'exemple représenté sur les figures.

Les différents couloirs de guidage des bouteilles (4) sont délimités par les parois (11) qui sont associées à un système de glissières pour permettre leur déplacement transversal au-dessus du tapis (3) du convoyeur.

Ces parois (11) comportent, à leur partie supérieure et au niveau de chaque portique (12), (13), (14), un organe de guidage en forme de coulisseau (31) qui coopère avec une glissière (32), laquelle glissière est solidaire du caisson (15).

Toutes les parois (11) sont reliées au système (30) de coordination mentionné précédemment, lequel système comprend : - un levier (33) qui est articulé sur l'une des parois (11) et en particulier sur la paroi centrale, et - des bielles (34) qui relient ce levier (33) aux autres parois (11) disposées de part et d'autre de ladite paroi centrale.

Les différentes bielles (34) sont parallèles entre elles et elles forment, avec le levier (33), les deux côtés de figures triangulaires homothétiques qui permettent le réglage simultané des différentes parois (11) avec un même écartement.

Le troisième côté de ces triangles est constitué par la ligne (35) qui est parallèle à la glissière (32), laquelle ligne passe par l'axe d'articulation du levier (33) et par les axes d'articulation des bielles (34), lesquels axes sont disposés sur les parois (11) correspondantes.

Les différentes bielles (34) sont disposées dans un même plan et ce plan est vertical, perpendiculaire à l'axe longitudinal du convoyeur. Cette disposition des bielles (34) permet de laisser libre l'espacé au-dessus des parois (11) pour intervenir, en cas de besoin, sur les bouteilles qui circulent dans les couloirs, pour les relever ou les ôter si nécessaire.

Le réglage de la largeur des couloirs, en fonction du format des bouteilles (4) est obtenu au moyen d'un système d'entraînement des parois (11) qui apparaît, figure 3, disposé au-dessus de la glissière (32).

Ce système d'entraînement comprend une courroie ou chaîne (36) sans fin qui est tendue entre deux roues (37, 38), lesquelles roues (37, 38) sont montées sur un support en forme de chariot (39) et l'une desdites roues, la roue (38), est actionnée au moyen de l'organe de commande (21).

Cet organe de commande (21), en forme de molette, est disposé sur un boîtier (40) qui est solidaire du chariot (39), mobile avec ce dernier, lequel boîtier (40) comprend des moyens appropriés pour transmettre le mouvement à la roue (38).

Le brin supérieur et le brin inférieur de la courroie ou chaîne (36) sans fin sont chacun reliés à l'une des parois (11) au moyen de bras (41, 42) respectivement, lesquels bras sont, par exemple, liés aux avant-dernières parois (11) latérales qui font office de parois maîtres.

Ainsi, la mise en mouvement de la roue (3 8), par l'organe de commande (21) et par la chaîne (36), provoque un écartement ou un rapprochement des bras (41) et (42) et des parois maîtres (11), selon le cas, et, par l'intermédiaire des bielles (34) et du levier (33), provoque un mouvement identique d'écartement ou de rapprochement de toutes les autres parois (11) qui sont des parois dites menées.

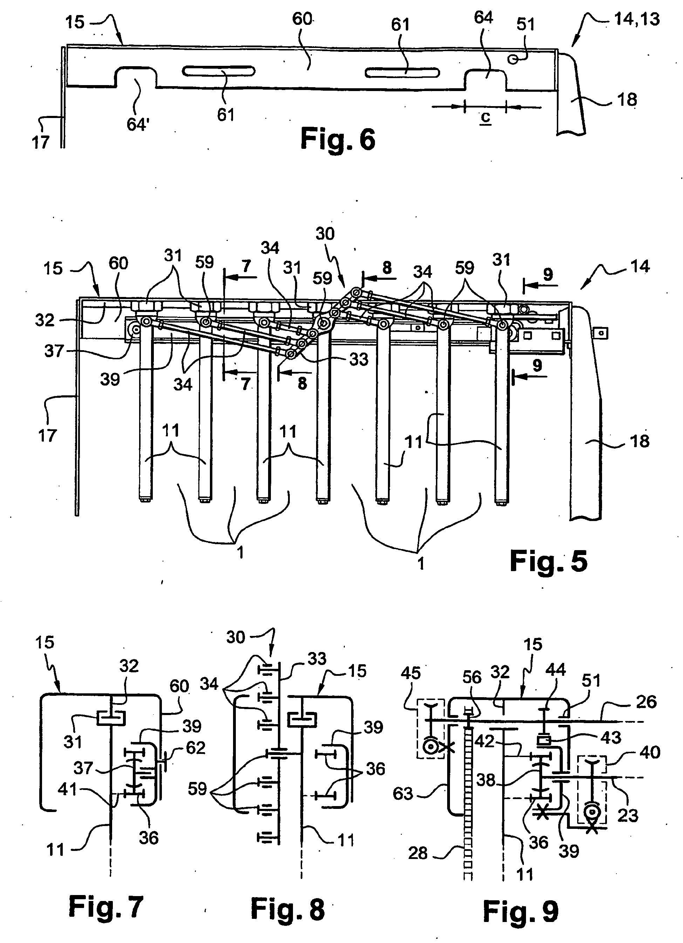

Le chariot (39) est guidé dans le caisson (15) au moyen d'un autre système de glissière disposé transversalement par rapport au convoyeur (2), lequel système sera détaillé plus loin en liaison avec les figures 6 et 7.

Ce chariot (39) est manoeuvré par un organe de commande (22) qui permet de le déplacer transversalement et qui, par voie de conséquence, permet de déplacer globalement l'ensemble des parois (11), et ceci par l'intermédiaire de la chaîne (36), des bras (41) et (42), des bielles (34) et du levier (33). C'est tout le mécanisme de réglage de la largeur des parois (11) qui se déplacent avec le chariot (39).

Le chariot (39) comporte, par exemple, une crémaillère (43) qui coopère avec une roue dentée (44), laquelle roue dentée (44) est manoeuvrée par l'organe de commande (22). Cet organe de commande (22), à fonctionnement manuel ou motorisé, comme pour l'organe (21), actionne la roue dentée (44), à travers un mécanisme approprié, réducteur par exemple, qui est disposé dans un boîtier (45), lequel boîtier (45) est solidaire du caisson (15).

La course C du chariot (39), illustrée figure 6, est prévue pour modifier la position des couloirs par rapport à l'axe médian du convoyeur ou plutôt de son tapis (3) ; cette course C est choisie pour permettre de caler sur ledit axe : - soit la paroi (11) centrale, - soit le plan médian de l'un des deux couloirs (1) disposés de part et d'autre de ladite paroi (11) centrale.

Cette course C est de l'ordre de la moitié de la largeur maximale des couloirs.

Le mouvement des différentes paroirs (11), sous l'effet de l'organe de commande (21), et le déplacement transversal global de ces différentes parois est transmis aux autres systèmes (30) disposés dans les caissons (15) des autres portiques, par l'intermédiaire des systèmes d'arbres dont il a été question précédemment en liaison avec les figures 1 et 2.

Ces systèmes d'arbres sont détaillés figure 4, sous la forme d'un schéma fonctionnel.

On retrouve tout d'abord le système d'entraînement des parois (11) pour les écarter ou les rapprocher simultanément selon le cas ; ce système d'entraînement est constitué de la chaîne (36) sans fin tendue entre les couples de roues (37), (38).

Les roues (38) disposées dans les portiques (13) et (14) sont montées toutes les deux sur un même arbre (23) qui est l'arbre menant ; la roue (38) disposée au niveau du portique aval (12) est montée sur l'arbre (24), lequel arbre (24) est entraîné par une chaîne (46) sans fin tendue entre une roue (47) montée sur ledit arbre (23) et une roue (48) montée sur ledit arbre (24).

L'arbre (23) est manoeuvré par l'organe de commande (21) qui est, par exemple, associé à un dispositif du type renvoi d'angle (50).

Les arbres (23) et (24) sont guidés dans des paliers qui sont solidaires des chariots (39) ; ils se déplacent en même temps que les différents chariots (39) qui portent les couples de roues (37, 38).

Comme mentionné précédemment, figure 1 et 2, la chaîne (46) est disposée dans un carter (25), lequel carter est guidé, à sa partie inférieure, directement par l'arbre (27) de l'autre système d'arbres.

Du fait de son déplacement sous l'effet du mouvement du chariot (39) et de son articulation sur l'arbre (27), l'arbre (24) peut comporter, à chacune de ses extrémités, des liaisons rotuliennes avec la roue (38) de la chaîne (36) et avec la roue (48) de sa chaîne (46) d'entraînement.

Des prolongements des arbres (23) ou (24) sont possibles pour commander d'autres mécanismes de manoeuvre qui coopèrent avec des prolongements amont des parois (11), non représentés.

Le système d'arbres qui permet la translation globale des couloirs est constitué de plusieurs arbres guidés dans la structure des différents portiques (12), (13), (14). Ainsi, les roues dentées (44) des portiques amont (13) et (14) sont montées sur un même arbre (26) qui est guidé dans des paliers (51) solidaires du caisson (15) de chacun desdits portiques (13), (14).

La roue dentée (44) du portique aval (12) est entraînée par un arbre (27) qui est guidé, d'une part, dans un palier (51) situé sur le caisson (15) dudit portique aval (12) et, d'autre part, dans un palier (52) situé sur le montant (18) du portique (14).

Chaque roue (44) coopère avec une crémaillère (43) du chariot (39) qui porte le système d'entraînement des parois (11) et en particulier les roues (37) et (38) de la chaîne (36) sans fin par laquelle s'effectue le réglage de la largeur desdits couloirs.

L'arbre (26) est entraîné par l'organe de manoeuvre (22) qui est associé, par exemple, à un renvoi d'angle (54).

La liaison entre l'arbre (26) menant et l'arbre (27) mené s'effectue au moyen de la chaîne (28) sans fin, laquelle chaîne est tendue entre les roues (56) et (57) qui sont montées respectivement sur lesdits arbres (26) et (27).

Là encore, des prolongements d'arbres sont possibles pour commander la translation globale de prolongements amont des couloirs (1) sans rien changer au réglage de leur écartement.

Les figures 5 à 9 illustrent, plus en détail, le mode de réalisation des différents mécanismes qui sont intégrés dans chacun des caissons (15), sachant que le caisson (12) aval est sensiblement différent car il est le reflet miroir des caissons (13, 14) situés en amont.

Comme représentée figure 5, la glissière (32) qui permet le guidage des parois (11) est située sous la surface supérieure du caisson (15). La partie supérieure de chaque paroi (11) comporte un coulisseau (31) dont l'extrémité inférieure est munie d'un axe (59) pour l'articulation de la bielle (34) correspondante ou du levier (33) ; ces différents axes (59) sont parallèles à l'axe longitudinal du convoyeur et ils se situent sensiblement au même niveau que le brin supérieur de la chaîne (36) sans fin, laquelle chaîne est tendue entre les deux roues (37) et (38), et ces roues (37) et (38) sont montées sur le chariot (39).

Le chariot (39) se présente sous la forme d'un profilé à section en U et il est guidé sur le rebord vertical (60) du caisson (15) au moyen de lumières (61) qui apparaissent sur la figure 6.

La figure 7 est une coupe agrandie de la figure 5, sous forme de schéma fonctionnel ; elle montre le caisson (15) avec le chariot (39) qui est porté et guidé par le rebord vertical (60) du caisson (15) au moyen de coulisseaux (62) ; ces coulisseaux (62) sont guidés dans chaque lumière (61) correspondante, visible figure 6.

Ce chariot (39) apparaît avec la roue (37) qui sert au guidage de la chaîne (36) sans fin ; le brin inférieur de cette chaîne (36) entraîne l'une des parois (11) par l'intermédiaire du bras (41).

Toujours sur cette figure 7, on remarque la glissière (32) qui est solidaire de la surface supérieure du caisson (15), et le coulisseau (31) qui est disposé à l'extrémité supérieure de la paroi (11).

La figure 8 est une coupe du caisson (15) au niveau de l'axe (59) du levier (33) ; cet axe (59) est solidaire de l'extrémité inférieure du coulisseau (31) et se situe au niveau de la paroi centrale (11).

On remarque que l'ensemble du système de coordination, c'est-à-dire le levier (33) et les bielles (34), est situé dans la partie supérieure des parois (11) afin de ne pas grever de manière trop importante l'espace sous le portique et risquer de gêner la circulation des bouteilles.

L'amplitude du réglage de la largeur des couloirs peut être de 60 à 105 mm, par exemple.

La figure 9 est une coupe du caisson (15) qui passe, d'une part, au niveau de l'arbre (23) de la roue (38) qui coopère avec la chaîne (36) et, d'autre part, au niveau de l'arbre (26) de la roue dentée (44) qui coopère avec la crémaillère (43).

Cette crémaillère (43) est solidaire du chariot (39) ; elle est en prise avec la roue dentée (44) et elle est entraînée par l'arbre (26), lequel arbre (26) est manoeuvré à partir du boîtier (45) et il entraîne également, par l'intermédiaire de la chaîne (38) sans fin, l'arbre (27), comme représenté figures 1, 2 et 4.

On remarque que la chaîne (28) sans fin est entraînée au moyen d'une roue (56) qui est située dans le caisson (15) entre le rebord frontal (63) de ce dernier et la glissière (32).

Sous l'effet de la roue dentée (44) et de sa crémaillère (43), le chariot (39) se déplace transversalement dans le caisson (15), entraînant avec lui le boîtier (40) de l'organe (21) de commande et l'arbre (23).

Sur la figure 6, on remarque les échancrures (64, 64') pratiquée dans le rebord vertical (60) du caisson (15), lesquelles échancrure (64, 64') permettent à l'arbre (23) de se déplacer transversalement en même temps que le chariot (39). La seconde échancrure (64'), qui apparaît sur le côté gauche du rebord (60), est un aménagement particulier qui peut, selon le montage, permettre le passage de l'extrémité de l'axe d'articulation de la roue (37) d'enroulement de la chaîne (36) sans fin qui sert à manoeuvrer les deux parois (11) maîtres.

Toujours sur cette figure 6, on remarque, au-dessus de l'échancrure (64) le palier (51) de l'arbre (26) qui commande le déplacement transversal du chariot (39).

Sur la figure 2, on remarque, au niveau des portiques (13) et (14), sur le rebord vertical (60) du caisson (15), les lumières (61) qui servent de guides au chariot (39) ainsi que les échancrures (64), (63') qui permettent, respectivement, le passage de l'arbre (23) et celui de l'axe de la roue (37).

On remarque également l'extrémité de l'arbre (26), lequel arbre (26), dans la configuration représentée figure 2, circule dans une lumière pratiquée dans le boîtier (40).

La figure 10 représente le détail de la fixation d'une bielle (34) sur le levier (33). Pour certains types de bouteilles, de grande dimension, ou pour des modifications du nombre de couloirs utiles, il est en effet intéressant de pouvoir escamoter l'une ou l'autre des parois latérales (11) et éviter ainsi des interférences avec l'un ou l'autre des montants (17), (18) des différents portiques.

Pour cela, la bielle (34) correspondante est solidaire du levier (33) au moyen d'un assemblage capable de coulisser. Le levier (33) comporte, à son extrémité, un mécanisme avec un bouton poussoir (65) qui coopère avec un crantage aménagé sur l'extrémité de la bielle (34). Ce bouton poussoir (65) permet de déverrouiller ladite bielle (34) par rapport au levier (33) et en particulier par rapport à son axe (66) et de la positionner d'une façon qui est adaptée à la situation. L'extrémité de la bielle (34) comporte une butée (67) qui permet de revenir facilement au calage initial.

Comme représenté figure 1, chaque paroi (11) est constituée de deux tronçons :- un tronçon (11') aval, qui est disposé au niveau du poste de reprise, et- un tronçon (11") amont, qui est articulé sur ledit tronçon (11') aval de façon à former, avec le ou les tronçons (11") amont adjacents, une sorte d'embouchure ou d'entonnoir.

L'articulation entre les deux tronçons (11') et (11 ") est aménagée entre les deux portiques (13) et (14), autour d'un axe qui est perpendiculaire au plan de déplacement des bouteilles (4), c'est-à-dire au tapis (3).

Cette articulation consiste en une charnière (68) disposée à la partie supérieure des parois (11).

La partie inférieure des parois (11) peut comporter des lames (69), en forme de joncs, qui font office de guides pour les bouteilles (4), dans une zone hors étiquette ; ces lames (69) font également office de renforts pour lesdites parois.

Les extrémités des tronçons amont (11 ") sont manipulées par les mécanismes de manoeuvre décrit précédemment. Cependant, le mécanisme de réglage de l'écartement des parois amont est légèrement déphasé par rapport aux autres mécanismes, c'est-à-dire que l'entrée amont des couloirs (1) est plus large de façon à former une véritable embouchure.

Ce déphasage est obtenu par un calage différent des bras (41) et (42) sur la chaîne (36) sans fin du mécanisme amont qui est logé dans le portique (14). Ainsi, par exemple, pour une largeur de 80 mm des couloirs (1) au niveau du poste de reprise (10), la largeur à l'embouchure desdits couloirs sera de l'ordre de 90 mm.

## Revendications

1. Dispositif de réglage de couloirs (1) de guidage d'objets du genre bouteilles (4) sur un convoyeur de fin de ligne comportant un poste de reprise (10), par exemple, lequel dispositif comprend un mécanisme pour manoeuvrer les parois (11) qui délimitent les différentes couloirs (1), lequel mécanisme est constitué d' un système d'entraînement coordonné qui agit sur lesdites parois (11) pour régler simultanément la largeur desdits couloirs (1), lesquelles parois (11) sont guidées sur des glissières (32) transversales qui sont solidaires de structures porteuses disposées au-dessus dudit convoyeur,
**caractérisé en ce qu'**il comporte des moyens pour déplacer transversalement lesdits couloirs (1) par rapport à l'axe longitudinal médian dudit convoyeur, lesquels moyens sont constitués, au niveau de chaque structure porteuse, d'un support en forme de chariot (39) qui est interposé entre ladite structure porteuse et ledit système d'entraînement coordonné desdites parois (11), lequel chariot (39) est mobile transversalement sous l'effet de moyens appropriés et il est guidé par un système de glissières qui est aménagé au niveau desdites structures porteuses pour effectuer ledit déplacement transversal de l'ensemble desdits couloirs (1) sans modifier leur largeur.

2. Dispositif de réglage de couloirs selon la revendication 1, **caractérisé en ce qu'**il comporte un mécanisme pour manoeuvrer les différents chariots (39) qui sont disposés dans les structures porteuses, lequel mécanisme de manoeuvre comporte des moyens de liaison, en forme d'arbres, qui relient lesdits chariots (39) entre eux de façon à réaliser un réglage centralisé de la position transversale de l'ensemble des couloirs (1) par rapport à l'axe médian de symétrie du convoyeur,

3. Dispositif de réglage de couloirs selon la revendication 2, **caractérisé en ce que** le mécanisme de manoeuvre de chaque chariot (39) est constitué d'une crémaillère (43) disposée sur ledit chariot et d'un pignon (44) qui est entraîné par un organe de commande (22), lequel organe (22) agit sur chaque chariot (39) par l'intermédiaire d'un système d'arbres (26), (27), lesquels arbres sont disposés de façon à ne pas entraver l'accès aux couloirs (1).

4. Dispositif de réglage de couloirs selon l'une quelconque des revendications 1 à 3, **caractérisé en ce que** le système d'entraînement des parois (11), qui permet le réglage de largeur des couloirs (1), comprend une courroie ou chaîne (36) sans fin tendue entre deux roues (37), (38) d'enroulement qui sont montées sur le chariot (39), laquelle chaîne (36) est entraînée par des moyens appropriés disposés directement sur ledit chariot (39) et ses deux brins sont parallèles au système de glissières (32) de guidage desdites parois (11), lesquels brins de ladite chaîne (36) sont chacun solidaires de l'une desdites parois (11), lesquelles parois (11) qui sont entraînées par ladite chaîne (36), dénommées parois maîtres, entraînent les autres parois (11) au moyen d'un système (30) de coordination de l'écartement de ces dernières.

5. Dispositif de réglage de couloirs selon la revendication 4, **caractérisé en ce que** le système (30) de coordination de l'écartement des différentes parois (11) comprend : - un levier (33) articulé sur l'une desdites parois (11) et - des bielles (34) parallèles entre elles, interposées entre ledit levier (33) et chacune des autres parois (11), lesdites bielles (34) formant, avec ledit levier (33), deux des côtés de figures triangulaires homothétiques et elles sont disposées dans un même plan qui est vertical, perpendiculaire à l'axe longitudinal du convoyeur.

6. Dispositif de réglage de couloirs selon l'une quelconque des revendications 1 à 5, **caractérisé en ce que** chaque structure porteuse des parois (11) comporte un caisson (15) permettant de loger l'ensemble des mécanismes de guidage et de manoeuvre desdites parois (11), lequel caisson (15) est associé à des montants (17) et (18) disposés latéralement sur le convoyeur et il forme, avec lesdits montants (17), une sorte de portique situé au-dessus du convoyeur, lesquels portiques (12,13) sont disposés de part et d'autre du poste (10) de reprise et le portique (14) est disposé en amont dudit portique (13), au niveau de l'entrée des couloirs.

7. Dispositif de réglage de couloirs selon la revendication 6, **caractérisé en ce que** chaque chariot (39) est guidé sur un rebord (60) du caisson (15) de la structure porteuse, lequel guidage s'effectue au moyen de lumières (61) horizontales aménagées dans ledit rebord (60) et de coulisseaux (62) solidaires dudit chariot (39).

8. Dispositif de réglage de couloirs selon la revendication 6, **caractérisé en ce que** le mécanisme de réglage comprend deux système d'arbres : - le système constitué des arbres (26), (27) pour la manoeuvre des chariots (39) et, - un système d'arbres pour la manoeuvre des parois (11), lesquels systèmes d'arbres comprennent, respectivement, un arbre (23), (26) maître qui s'étend entre les deux portiques (13), (14) et un arbre (24), (27) mené, relié audit arbre maître correspondant par une chaîne (28), (46), respectivement, du type sans fin, lequel arbre (24) s'étend dudit portique (13) jusqu'au portique (12) aval et la chaîne (46) qui est disposée entre lesdits arbres (23) et (24) circule dans un carter (25) qui est guidé par ledit arbre (27), lequel arbre (27) s'étend depuis le portique (14) jusqu'au portique (12) aval, lesdits arbres étant, d'une manière générale, disposés à un niveau qui n'entrave pas l'accès aux couloirs (1) pour un opérateur.

9. Dispositif de réglage de couloirs selon l'une quelconque des revendications 1 à 8, **caractérisé en ce que** chaque paroi (11) est constituée de deux tronçons articulés l'un par rapport à l'autre: - un tronçon (11') aval, qui est disposé au niveau du poste de reprise (10), et - un tronçon (11") amont qui est articulé sur ledit tronçon (11') aval autour d'un axe vertical de façon à former, avec le ou les tronçons (11 ") adjacents, une sorte d'embouchure ou d'entonnoir, lesquels tronçons (11 ") amont sont manipulés, au niveau de leur extrémité amont, par le système d'entraînement desdites parois (11), lequel système d'entraînement des tronçons (11 ") est déphasé par rapport aux autres systèmes d'entraînement des tronçons (11') par un réglage différent, à l'origine, de façon à imprimer un écart plus important au niveau de l'entrée desdits tronçons (11") amont.

10. Dispositif de réglage de couloirs selon les revendications 5 à 9, **caractérisé en ce qu'**il comporte des moyens pour modifier rapidement la position d'une paroi latérale (11) et l'escamoter, lesquels moyens sont disposés au niveau de l'extrémité de la bielle (34) correspondante et en particulier sur le levier (33), lequel levier comporte un bouton poussoir (65) qui coopère avec un crantage aménagé sur ladite bielle (34), cette dernière comportant, en outre, une butée (67) qui permet de revenir facilement au réglage initial.

## Claims

1. Device for adjusting lanes (1) for guiding objects of the bottle (4) type on an end-of-line conveyor comprising a handover station (10), for example, which device comprises a mechanism for moving the walls (11) which delimit the various lanes (1), which mechanism consists of a coordinated drive system which acts on said walls (11) to adjust the width of said lanes (1) simultaneously, which walls (11) are guided on transverse slides (32) which are secured to bearing structures positioned over said conveyor,
**characterized in that** it comprises means for shifting said lanes (1) transversely with respect to the median longitudinal axis of said conveyor, which means consist, at each bearing structure, of a carriage-like support (39) which is inserted between said bearing structure and said coordinated drive system for driving said walls (11), which carriage (39) can move transversely under the effect of appropriate means and is guided by a slide system formed at said bearing structures in order to shift all of said lanes (1) transversely without modifying their width.

2. Device for adjusting lanes according to claim 1,
**characterized in that** it comprises a mechanism for moving the various carriages (39) which are positioned in the bearing structures, which movement mechanism comprises connecting means, in the form of shafts, connecting said carriages (39) together so that the transverse position of all the lanes (1) can be adjusted in a centralized manner with respect to the median axis of symmetry of the conveyor.

3. Device for adjusting lanes according to claim 2,
**characterized in that** the mechanism for moving each carriage (39) consists of a rack (43) positioned on said carriage and of a pinion (44) driven by a control member (22), which member (22) acts on each carriage (39) via a system of shafts (26), (27), which shafts are positioned in such a way that they do not impede access to the lanes (1).

4. Device for adjusting lanes according to any one of claims 1 to 3, **characterized in that** the driving system for driving the walls (11), that allows the width of the lanes (1) to be adjusted, comprises an endless belt or chain (36) stretched between two wrap-around wheels (37), (38), which are mounted on the carriage (39), which chain (36) is driven by appropriate means positioned directly on said carriage (39) and its two strands are parallel to the system of slides (32) that guide said walls (11), which strands of said chain (36) are each secured to one of said walls (11), which walls (11), which are driven by said chain (36), termed master walls, drive the other walls (11) by means of a system (30) for coordinating the separation between these walls.

5. Device for adjusting lanes according to claim 4,
**characterized in that** the system (30) for coordinating the separation of the various walls (11) comprises:
- a lever (33) articulated to one of said walls (11), and
- mutually parallel link rods (34) inserted between said lever (33) and each of the other walls (11), said link rods (34) forming, with said lever (33), two of the sides of homothetic triangular shapes and are positioned in one and the same plane which is vertical, perpendicular to the longitudinal axis of the conveyor.

6. Device for adjusting lanes according to any one of claims 1 to 5, **characterized in that** each bearing structure that bears the walls (11) comprises a box structure (15) to house all the mechanisms for guiding and moving said walls (11), which box structure (15) is associated with uprights (17) and (18) positioned laterally on the conveyor and it forms, with said uprights (17), a kind of portal frame situated over the conveyor, which portal frames (12, 13) are positioned on each side of the handover station (10) and the portal frame (14) is positioned upstream of said portal frame (13) at the entrance to the lanes.

7. Device for adjusting lanes according to claim 6,
**characterized in that** each carriage (39) is guided along a rim (60) of the box structure (15) of the bearing structure, which guidance is by way of horizontal slots (61) formed in said rim (60) and of sliders (62) secured to said carriage (39).

8. Device for adjusting lanes according to claim 6,
**characterized in that** the adjusting mechanism comprises two systems of shafts:
- the system consisting of the shafts (26), (27) for moving the carriages (39), and - a system of shafts for moving the walls (11), which systems of shafts respectively comprise a master shaft (23), (26) which extends between the two portal frames (13), (14) and a driven shaft (24), (27), connected to said corresponding master shaft by a respective chain (28), (46) of the endless type, which shaft (24) extends from said portal frame (13) to the downstream portal frame (12) and the chain (46) which is arranged between said shafts (23) and (24) runs in a casing (25) which is guided by said shaft (27), which shaft (27) extends from the portal frame (14) as far as the downstream portal frame (12), said shafts in general being in a position that does not impede operator access to the lanes (1).

9. Device for adjusting lanes according to any one of claims 1 to 8, **characterized in that** each wall (11) consists of two portions hinged together:
- a downstream portion (11') positioned level with the handover station (10), and - an upstream portion (11'') hinged to said downstream portion (11') about a vertical axis so as to form, with the adjacent portion or portions (11"), a kind of mouth or funnel, which upstream portions (11'') are handled, at their upstream end, by the drive system for driving said walls (11), which drive system for driving the portions (11'') is out of phase with the other drive systems for driving the portions (11') through having been set up differently from the outset so that a wider spacing is applied to the entrance to said upstream portions (11'').

10. Device for adjusting lanes according to claims 5 to 9, **characterized in that** it comprises means for quickly altering the position of one side wall (11) and retracting it, which means are positioned level with the end of the corresponding link rod (34) and, in particular, on the lever (33), which lever comprises a push-button (65) which engages with notches formed on said link rod (34), the latter further comprising an end stop (67) that makes it possible easily to revert to the initial set-up.

## Patentansprüche

1. Vorrichtung zur Einstellung von Gängen (1) zum Führen von Gegenständen vom Typ Flaschen (4) auf einer Fördereinrichtung am Ende einer Anlage, die beispielsweise eine Entnahmestation (10) aufweist, wobei die Vorrichtung einen Mechanismus zum Dirigieren der die verschiedenen Gänge (1) begrenzenden Wände (11) umfasst, und der Mechanismus aus einem System zum koordinierten Antrieb gebildet ist, das auf die Wände (11) einwirkt, um gleichzeitig die Breite der Gänge (1) einzustellen, wobei die Wände (11) auf Querschienen (32) geführt sind, die fest mit über der Fördereinrichtung angeordneten Tragkonstruktionen verbunden sind,
**dadurch gekennzeichnet, dass** sie Mittel aufweist, um die Gänge (1) quer zur Mittellängsachse der Fördereinrichtung zu verschieben, wobei die Mittel im Bereich jeder Tragkonstruktion aus einem Support in Form eines Schlittens (39) gebildet sind, der zwischen der Tragkonstruktion und dem System zum koordinierten Antrieb der Wände (11) angeordnet ist, und der Schlitten (39) unter dem Einfluss geeigneter Mittel querbeweglich und von einem Schienensystem geführt ist, das im Bereich der Tragkonstruktionen vorgesehen ist, um die Querverschiebung aller Gänge (1) ohne Änderung ihrer Breite vorzunehmen.

2. Vorrichtung zur Einstellung von Gängen nach Anspruch 1, **dadurch gekennzeichnet, dass** sie einen Mechanismus zum Dirigieren der verschiedenen, in den Tragkonstruktionen angeordneten Schlitten (39) umfasst, der Verbindungsmittel in Form von Wellen aufweist, die die Schlitten (39) miteinander so verbinden, dass eine zentralisierte Einstellung der Querlage aller Gänge (1) relativ zur mittleren Symmetrieachse der Fördereinrichtung verwirklicht ist.

3. Vorrichtung zur Einstellung von Gängen nach Anspruch 2, **dadurch gekennzeichnet, dass** der Dirigiermechanismus für jeden Schlitten (39) aus einer auf dem Schlitten angeordneten Zahnstange (43) und aus einem von einem Steuerelement (22) angetriebenen Ritzel (44) gebildet ist, wobei das Element (22) über ein System aus Wellen (26), (27) auf jeden Schlitten (39) einwirkt, und die Wellen so angeordnet sind, dass sie den Zugang zu den Gängen (1) nicht versperren.

4. Vorrichtung zur Einstellung von Gängen nach einem der Ansprüche 1 bis 3, **dadurch gekennzeichnet, dass** das Antriebssystem für die Wände (11), mit dem die Breite der Gänge (1) eingestellt werden kann, einen Endlosriemen oder eine Endloskette (36) umfasst, der bzw. die zwischen zwei am Schlitten (39) montierten Wickelrädern (37), (38) gespannt ist, wobei die Kette (36) mit geeigneten unmittelbar an dem Schlitten (39) angeordneten Mitteln angetrieben ist, und ihre beiden Stränge parallel zum Schienensystem (32) zum Führen der Wände (11) verlaufen, wobei die Stränge der Kette (36) jeweils fest mit einer der Wände (11) verbunden sind, und die von der Kette (36) mitbewegten und als Hauptwände bezeichneten Wände (11) die anderen Wände (11) mittels eines Systems (30) zur Koordination ihres Abstands mitbewegen.

5. Vorrichtung zur Einstellung von Gängen nach Anspruch 4, **dadurch gekennzeichnet, dass** das System (30) zur Koordination des Abstands der verschiedenen Wände (11) umfasst: - einen Hebel (33), der gelenkig mit einer der Wände (11) verbunden ist, und - zueinander parallele Stangen (34), die zwischen dem Hebel (33) und jeder der anderen Wände (11) angeordnet sind, mit dem Hebel (33) zwei der Seiten homothetischer dreieckiger Figuren bilden und in derselben Ebene angeordnet sind, die vertikal und rechtwinklig zur Längsachse der Fördereinrichtung verläuft.

6. Vorrichtung zur Einstellung von Gängen nach einem der Ansprüche 1 bis 5, **dadurch gekennzeichnet, dass** jede Tragkonstruktion für die Wände (11) einen Kasten (15) aufweist, in dem die Gesamtheit der Mechanismen zum Führen und Dirigieren der Wände (11) untergebracht werden kann, wobei der Kasten (15) Stützen (17) und (18) zugeordnet ist, die seitlich an der Fördereinrichtung angeordnet sind, und mit diesen Stützen (17) eine Art Gerüst bildet, das sich über der Fördereinrichtung befindet, wobei die Gerüste (12, 13) auf beiden Seiten der Entnahmestation (10) angeordnet sind und das Gestell (14) dem Gestell (13) vorgelagert im Einlaufbereich der Gänge angeordnet ist.

7. Vorrichtung zur Einstellung von Gängen nach Anspruch 6, **dadurch gekennzeichnet, dass** jeder Schlitten (39) an einem Rand (60) des Kastens (15) der Tragkonstruktion geführt wird, wobei die Führung mithilfe waagerechter Löcher (61) erfolgt, die in dem Rand (60) vorgesehen sind, und mithilfe der Gleitelemente (62), die fest mit dem Schlitten (39) verbunden sind.

8. Vorrichtung zur Einstellung von Gängen nach Anspruch 6, **dadurch gekennzeichnet, dass** der Einstellmechanismus zwei Wellensysteme umfasst: - das aus den Wellen (26), (27) zum Dirigieren der Schlitten (39) gebildete System und - ein Wellensystem zum Dirigieren der Wände (11), wobei die Wellensysteme jeweils eine Hauptwelle (23), (26) umfassen, die zwischen den beiden Gerüsten (13), (14) verläuft, und eine getriebene Welle (24), (27), die mit der entsprechenden Hauptwelle über eine Endloskette (28) beziehungsweise (46) verbunden ist, wobei sich die Welle (24) von dem Gerüst (13) bis zu dem hinteren Gerüst (12) erstreckt, und die Kette (46), die zwischen den Wellen (23) und (24) angeordnet ist, in einem Gehäuse (25) läuft, das von der Welle (27) geführt wird, und sich die Welle (27) von dem Gerüst (14) bis zu dem nachgelagerten Gerüst (12) erstreckt, wobei die Wellen ganz allgemein in einem Bereich angeordnet sind, in dem sie einer Bedienperson den Zugang zu den Gängen (1) nicht versperren.

9. Vorrichtung zur Einstellung von Gängen nach einem der Ansprüche 1 bis 8, **dadurch gekennzeichnet, dass** jede Wand (11) aus zwei Abschnitten gebildet ist, die beweglich miteinander verbunden sind: - einen nachgelagerten Abschnitt (11'), der im Bereich der Entnahmestation (10) angeordnet ist, und - einem vorgelagerten Abschnitt (11''), der um eine senkrechte Achse herum derart beweglich mit dem nachgelagerten Abschnitt (11') verbunden ist, dass mit dem oder den angrenzenden Abschnitten (11'') eine Art Öffnung oder Trichter gebildet wird, wobei die vorgelagerten Abschnitte (11'') im Bereich ihres vorgelagerten Endes vom Antriebsystem für die Wände (11) bewegt werden, wobei das Antriebssystem für die Abschnitte (11'') durch eine andere Einstellung zu Beginn relativ zu den anderen Antriebssystemen für die Abschnitte (11') verschoben ist, sodass im Einlaufbereich der vorgelagerten Abschnitte (11'') ein größerer Abstand erreicht wird.

10. Vorrichtung zur Einstellung von Gängen nach einem der Ansprüche 5 bis 9, **dadurch gekennzeichnet, dass** sie Mittel umfasst, um schnell die Stellung einer Seitenwand (11) zu ändern und sie einzuziehen, die Mittel im Bereich des Endes der entsprechenden Stange (34) und insbesondere am Hebel (33) angeordnet sind, wobei der Hebel eine Drucktaste (65) aufweist, die mit Rillen zusammenwirkt, die auf der Stange (34) vorgesehen sind, wobei letztere des Weiteren einen Anschlag (67) aufweist, mit dem einfach in die Eingangseinstellung zurückgekehrt werden kann.
